# EUROPÄISCHE PATENTSCHRIFT

(11) **EP 1 375 307 B1**
(45) Veröffentlichungstag und Bekanntmachung des Hinweises auf die Patenterteilung: **11.11.2009**
(21) Anmeldenummer: 03013865.5
(22) Anmeldetag: 18.06.2003
(51) Int. Cl.: B62D 25/06

(54) **Glasdach für Kraftfahrzeug**
Glass roof for automobile
Toit en verre pour véhicule automobile

(30) Priorität: 21.06.2002 FR 0207684
(43) Veröffentlichungstag der Anmeldung: 02.01.2004
(73) Patentinhaber: Webasto AG, 82131 Stockdorf (DE)
(72) Erfinder: Albert, Jean-Paul, 79700 St. Pierre Des Echaubrognes (FR)
(74) Vertreter: Schwan - Schwan - Schorer

(56) Entgegenhaltungen:
- EP-A- 0 429 361
- DE-A- 19 956 567
- US-A1- 2002 021 029
- US-B1- 6 331 065

## Beschreibung

Die vorliegende Erfindung betrifft ein Glasdach zum Verschließen einer im Dach eines Kraftfahrzeugs vorgesehenen Öffnung.

Es ist bekannt, dass das Dach eines Kraftfahrzeugs wenigstens teilweise aus einer Glasscheibe bestehen kann. Normalerweise wird die im Dach vorgesehene Öffnung durch eine als Anschlag dienende Auflagefläche begrenzt, welche zur Aufnahme des Umfangsrandes der Glasscheibe bestimmt ist.

Konkret erstreckt sich die Öffnung im Allgemeinen in Querrichtung zwischen den Seiten der Karosserie und in Längsrichtung zwischen einem vorderen, das Dach von der Windschutzscheibe trennenden Dachelement und einem hinteren, das Dach von der Heckscheibe trennenden Dachelement. Die seitlichen Dachelemente, das vordere Dachelement und das hintere Dachelement weisen an den der Öffnung zugewandten Rändern jeweils einen einzelnen Umfangsanschlag auf.

Die Kombination dieser vier einzelnen Umfangsanschläge bildet die Auflagefläche für den Umfangsrand der Glasscheibe, deren feste Verbindung üblicherweise mittels Verklebung hergestellt wird.

In der Praxis ist ein Kraftfahrzeug mit Glasdach im Allgemeinen lediglich von einem herkömmlichen Modell mit Blechdach abgeleitet. Dies bedeutet, dass die Glasscheibe auf einer normalen Karosserie, also auf einer nicht spezifischen Auflagefläche verklebt werden muß. Da diese als Anschlag dienende Auflagefläche jedoch dazu bestimmt ist, an der Basis mit einem Blechdach verschweißt zu werden, stellt sie keine besondere Anforderung an Planheit und/oder Stetigkeit bzw. Kontinuität.

Im Fall der Verklebung einer Glasscheibe stellt dies eine größere Schwierigkeit dar.

Die US 2002/0021029 A1, die die Basis für den Oberbegriff des Anspruchs 1 bildet, beschreibt ein Fahrzeugdachmodul mit einer durchsichtigen Dachhaut und einer Innenschale, wobei die Innenschale rahmenartig geformt ist. Zur Befestigung des Dachmoduls auf einer Karosserie wird der rahmenartige Bereich der Innenschale auf einen Karosserierahmen aufgelegt und mit diesem verklebt. Die Technik der festen Verbindung mittels Verklebung setzt eine gleichmäßige, kontinuierliche und im Wesentlichen parallel zu dem fest zu verbindenden Element verlaufende Auflagefläche voraus. Tatsächlich sind die Gleichmäßigkeit und Kontinuität des Kleberüberzugs nicht mehr gewährleistet, wenn Planheitsfehler vorliegen und/oder Diskontinuitäten vorhanden sind. Daraus ergibt sich ein erhebliches Risiko im Hinblick auf Undichtigkeiten, sobald die Glasscheibe eingesetzt ist. Wenn diese Schwierigkeit beseitigt werden soll und/oder wenn der Abstand zwischen der Auflagefläche und der Oberfläche des fest zu verbindenden Elements zu große Unregelmäßigkeiten aufweist, kann die Neigung bestehen, Kleber hinzuzufügen. Leider ist auf dem Gebiet der Klebetechnik bekannt, dass sich ein Kleberüberschuss überhaupt nicht mit einer einwandfreien Verbindung verträgt.

Somit besteht das durch die vorliegende Erfindung zu lösende technische Problem darin, ein Glasdach zum Verschließen einer in einem Kraftfahrzeugdach vorgesehenen Öffnung vorzuschlagen, wobei die Öffnung durch einen als Auflagefläche dienenden Anschlag begrenzt wird, das Dach eine Glasscheibe aufweist, deren innerer Umfangsrand zur Verklebung mit der genannten Auflagefläche geeignet ist, und das Glasdach es ermöglicht, unabhängig vom Profil der Auflagefläche die mit dem jetzigen Stand der Technik verbundenen Probleme zu vermeiden, wobei gleichzeitig eine wirksame Verklebung und eine erhöhte Dichtigkeit der so hergestellten Verbindung ermöglicht wird.

Die erfindungsgemäße Lösung der bestehenden technischen Probleme ergibt sich aus den im kennzeichnenden Teil des Anspruchs 1 beschriebenen Merkmalen.

Jeder überformte Teil ist somit für eine Sandwichanordnung zwischen einem Teil der genannten inneren Umfangsfläche und einem entsprechenden Teil der genannten Auflagefläche bestimmt. Ziel ist es dabei, je nach Lage des Falls Planheitsfehler und/oder Diskontinuitäten der Auflagefläche und/oder zu starke Unregelmäßigkeiten im Abstand zwischen der inneren Umfangsfläche und der genannten Auflagefläche auszugleichen.

Die Dicke jedes überformten Teils kann deshalb je nach dem Profil des entsprechenden Teils der Auflagefläche, aber auch je nach der erwünschten relativen Lage zwischen der Glasscheibe und der genannten Auflagefläche, insgesamt betrachtet unterschiedlich sein.

Dabei wird eine feste Verbindung zwischen der inneren Umfangsfläche und der Auflagefläche durch Aufbringung einer konstanten Befestigungskleberdicke zur Sicherung einer Befestigung und einer perfekten Dichtigkeit angestrebt.

Die so definierte Erfindung bietet den Vorteil, an ein Standard-Kraftfahrzeug angepasst werden zu können, bei dem grundsätzlich ein Blechdach vorgesehen ist. Tatsächlich ist es wirtschaftlicher, Glasdächer anzupassen, statt die Auflagefläche jedes Standard-Fahrzeugs zu korrigieren.

Diese als nicht einschränkendes Beispiel gegebene Beschreibung macht besser verständlich, wie die Erfindung ausgeführt werden kann, und in der Beschreibung wird auf die beigefügten Zeichnungen Bezug genommen, in denen
- Figur 1: schematisch eine Unteransicht und eine perspektivische Ansicht eines erfindungsgemäßen Glasdachs wiedergibt;

- Figur 2: eine Unteransicht und eine perspektivische Ansicht bildet, in welcher der in Figur 1 als A eingekreiste Abschnitt genauer veranschaulicht wird;
- Figur 3: eine Unteransicht des in Figur 1 als B eingekreisten Abschnitts ist;
- Figur 4: eine Querschnittsansicht gemäß Ebene P des in Figur 3 dargestellten Dachabschnitts ist.

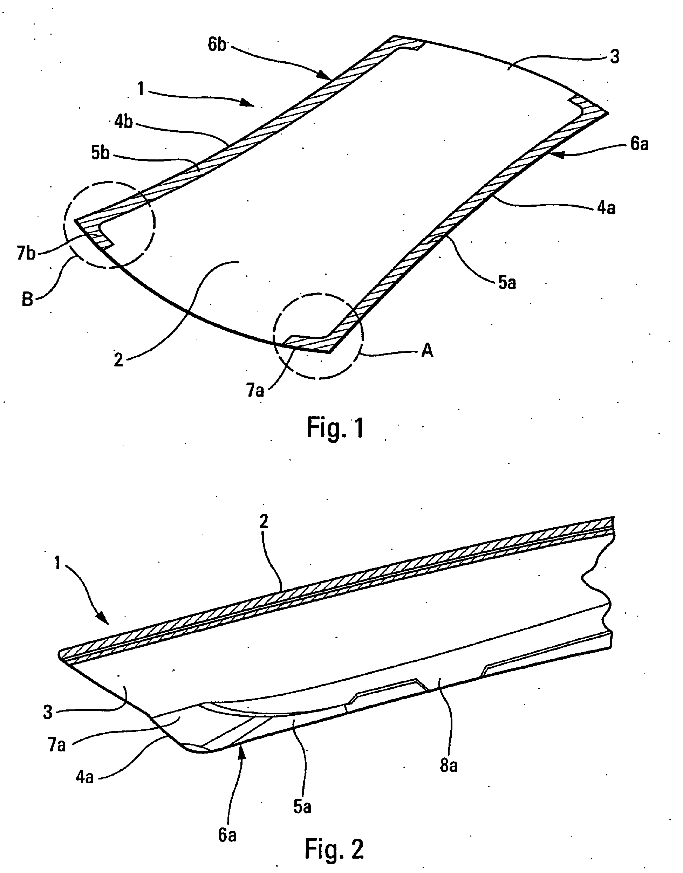

Das in Figur 1 dargestellte Glasdach 1 hat den Zweck, eine in einem Kraftfahrzeugdach vorgesehene Öffnung zu verschließen. Diese Öffnung wird auf an sich bekannte Weise durch einen eine Auflagefläche bildenden Anschlag begrenzt, und das Dach weist eine Glasscheibe 2 auf, deren innere Umfangsfläche 3 mit der genannten Auflagefläche verklebt werden kann. Unter Umfangsfläche 3 ist jede am Rand und auf der Innenseite der Glasscheibe 2 gelegene Fläche zu verstehen.

Erfindungsgemäß wird wenigstens ein Teil der inneren Umfangsfläche 3 der Glasscheibe 2 mit einem Material 4a, 4b überformt, dessen Außenfläche 5a, 5b, welche der Auflagefläche gegenüberliegen soll, im wesentlichen parallel zu dem entsprechenden Abschnitt der genannten Auflagefläche verläuft.

Jeder überformte Teil 6a, 6b erlaubt somit den Ausgleich jeder Abweichung in der Parallelität und/oder im Abstand zwischen der inneren Umfangsfläche 3 und der Auflagefläche. Die Verklebung kann somit vorteilhaft mit einer konstanten Kleberdicke zur Erzielung einer festen Verbindung und optimalen Dichtigkeit hergestellt werden.

Bei dieser speziellen Ausführungsform, welche zur Veranschaulichung der Erfindung verwendet wurde, werden nur die beiden Längskanten der Glasscheibe 2 vollständig überformt; die entsprechenden überformten Teile 6a, 6b sind hier vollständig symmetrisch. Die den beiden Seitenkanten der Glasscheibe 2 entsprechenden Abschnitte der inneren Umfangsflächen 3 sind im Verhältnis zu dieser nur teilweise überformt, und zwar in Höhe ihrer jeweiligen Enden. Tatsächlich handelt es sich lediglich um einfache seitliche Rückführungen 7a, 7b, welche von den im wesentlichen in Längsrichtung verlaufenden überformten Teilen 6a, 6b ausgehen.

Wie in Figur 2 genauer zu erkennen ist, weist jeder der überformten Teile 6a, 6b eine komplexe Form auf, welche sich aus dem häufig beanspruchten Profil der Auflagefläche ergibt. Jedem konkaven Abschnitt des überformten Teils 6a, 6b entspricht ein konvexer Abschnitt der Auflagefläche und umgekehrt.

Gemäß einem Merkmal der Erfindung weist jeder überformte Abschnitt 6a, 6b eine Form auf, welche im wesentlichen dem Raum entspricht, der die innere Umfangsfläche 3 einerseits und die mit einer konstanten und ausreichenden Kleberschicht überzogene Auflagefläche andererseits voneinander trennt, wenn die relative Anordnung der genannten inneren Umfangsfläche 3 und der genannten Auflagefläche optimal ist.

Jeder überformte Teil besitzt somit eine zu dem entsprechenden Abschnitt der Auflagefläche im Wesentlichen komplementäre Form. Er bildet somit ein ideales Zwischenelement zur Verbindung dieser beiden Elemente, welche sich in der Praxis fast nie ergänzen, wobei es selbstverständlich ist, dass Gleichmäßigkeit und Kontinuität der Kleberschicht unverzichtbare Kriterien für eine einwandfreie Verklebung darstellen.

In Figur 2 ist auch zu sehen, dass die Glasscheibe in diesem Ausführungsbeispiel eine mehrlagige Struktur aufweist.

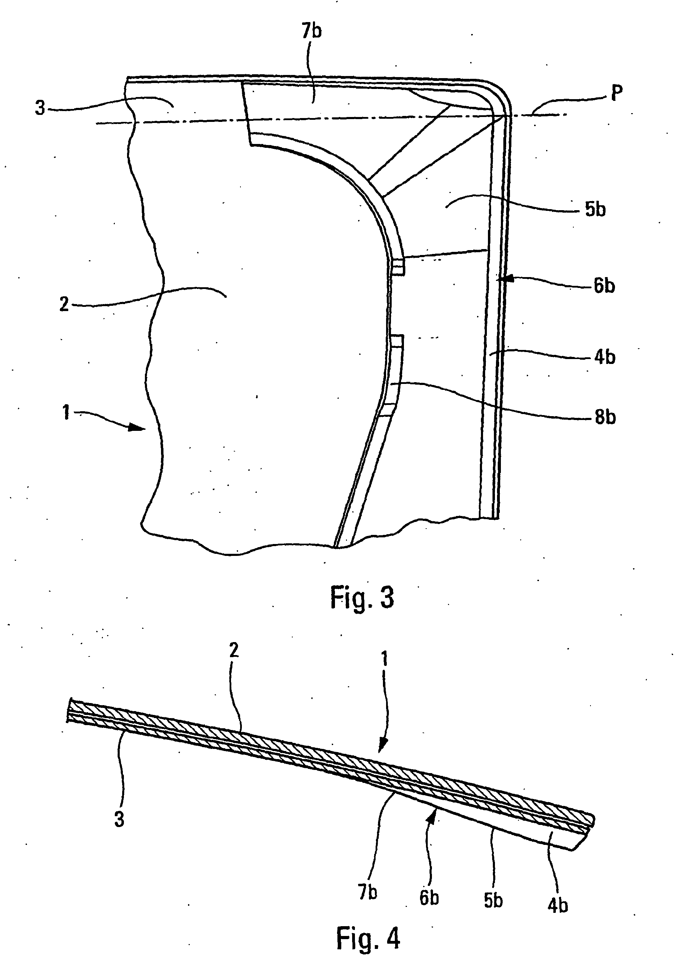

Figur 3 veranschaulicht den in Figur 1 eingekreisten Abschnitt B, um im Verhältnis zu dem in Figur 2 dargestellten eingekreisten Abschnitt A einfach zu zeigen, daß die überformten Teile 6a, 6b vollständig symmetrisch sind.

Neben der mehrlagigen Struktur der Glasscheibe 2 zeigt Figur 4 auch das Abkantprofil der Rückführung 7b, welche aus einem Stück mit dem überformten Teil 6b besteht.

Wie in den Figuren 2 und 3 zu erkennen ist, weist jeder überformte Teil 6a, 6b wenigstens einen als Kalibrier- bzw. Eichanschlag ausgebildeten vorspringenden Teil 8a, 8b auf, dessen Höhe der gewünschten Kleberdicke entspricht. Das freie Ende jedes Eichanschlags 8a, 8b ist dazu bestimmt, mit der Auflagefläche in Kontakt zu kommen. Das Vorhandensein dieser vorspringenden Eichanschläge 8a, 8b ermöglicht somit eine Positionierung der überformten Glasscheibe 2 im Verhältnis zur Auflagefläche in einem bestimmten relativen Abstand, welcher der gewünschten Kleberdicke entspricht. Besonders vorteilhaft ist, dass längs jedes überformten Teils 6a, 6b in regelmäßigen Abständen Eichanschläge 8a, 8b vorgesehen sind.

Natürlich kann das Glasdach 1 mit einer Verdunkelungsvorrichtung versehen sein, welche parallel zu der Innenfläche der Glasscheibe 2 entfaltet werden kann, insbesondere um an Tagen mit starker Sonneneinstrahlung den Treibhauseffekt im Fahrzeuginneren zu begrenzen. Die Verdunkelungsvorrichtung ist in diesem Fall direkt mit der Innenseite der Glasscheibe 2 fest verbunden, sodass ein echtes, vollständiges und einbaufertiges Modul entsteht.

## Patentansprüche

1. Glasdach zum Verschließen einer in einem Kraftfahrzeugdach vorgesehenen Öffnung, wobei die Öffnung durch einen als Auflagefläche ausgebildeten Anschlag begrenzt wird und das Dach (1) eine Glasscheibe (2) aufweist, deren innere Umfangsfläche (3) zur Verklebung mit der genannten Auflagefläche geeignet ist, wobei wenigstens ein Teil der inneren Umfangsfläche (3) der Glasscheibe (2) mit einem Material (4a, 4b) überformt wird, dessen Außenfläche (5a, 5b), welche der Auflagefläche gegenüberliegen soll, im wesentlichen parallel zu dem entsprechenden Abschnitt der genannten Auflagefläche verläuft, **dadurch gekennzeichnet, dass** jeder überformte Teil (6a, 6b) die Abweichungen in der Parallelität und/oder im Abstand zwischen der inneren Umfangsfläche (3) und der Auflagefläche ausgleicht, indem er eine Form aufweist, welche im wesentlichen dem Raum entspricht, der die innere Umfangsfläche (3) einerseits und die mit einer konstanten und ausreichenden Kleberdicke versehene Auflagefläche andererseits voneinander trennt, wenn die relative Anordnung der genannten inneren Umfangsfläche (3) und der Auflagefläche optimal ist und jedem konkaven Abschnitt des überformten Teils ein konvexer Abschnitt der Auflagefläche entspricht und umgekehrt.

2. Glasdach nach Anspruch 1, **dadurch gekennzeichnet, dass** längs jedes überformten Teils (6a, 6b) eine Vielzahl von separaten Eichanschlägen (8a, 8b) vorgesehen sind, die in gleichmäßigen Abständen voneinander entlang der Längsausdehnung des Teils angeordnet sind.

3. Glasdach (1) nach Anspruch 2, **dadurch gekennzeichnet, dass** die Höhe der als Eichanschläge ausgebildeten vorspringenden Teile (8a, 8b) der gewünschten Kleberdicke entspricht.

4. Glasdach (1) nach einem der vorhergehenden Ansprüche, **dadurch gekennzeichnet, dass** es eine Verdunkelungsvorrichtung aufweist, welche parallel zur Innenfläche der Glasscheibe (2) entfaltet werden kann.

## Claims

1. Glass roof for closing an opening provided in an automobile roof, wherein the opening is bounded by a stop designed as a supporting surface, and the roof (1) has a glass pane (2), the inner circumferential surface (3) of which is suitable for adhesively bonding to the supporting surface mentioned, and wherein at least part of the inner circumferential surface (3) of the glass pane (2) is overlaid with a material (4a, 4b), the outer surface (5a, 5b) of which, which outer surface is intended to lie opposite the supporting surface, runs substantially parallel to the corresponding section of the supporting surface mentioned, **characterized in that** each overlaid part (6a, 6b) compensates for the deviations in the parallelism and/or in the distance between the inner circumferential surface (3) and the supporting surface by said part being of a shape which substantially corresponds to the space which separates the inner circumferential surface (3) and the supporting surface, which is provided with a constant and adequate adhesive thickness, from each other when the relative arrangement of the inner circumferential surface (3) mentioned and the supporting surface is optimum, and a convex section of the supporting surface corresponds to each concave section of the overlaid part, and vice versa.

2. Glass roof according to Claim 1, **characterized in that** a multiplicity of separate calibrating stops (8a, 8b) are provided along each overlaid part (6a, 6b) and are arranged at uniform distances from one another along the longitudinal extent of the part.

3. Glass roof (1) according to Claim 2, **characterized in that** the height of the projecting parts (8a, 8b) which are designed as calibrating stops corresponds to the desired adhesive thickness.

4. Glass roof (1) according to one of the preceding claims, **characterized in that** it has a darkening device which can be deployed parallel to the inner surface of the glass pane (2).

## Revendications

1. Toit en verre permettant de fermer une ouverture prévue dans un toit de véhicule automobile, l'ouverture étant délimitée par une butée prenant la forme d'une surface d'appui et le toit (1) comportant une vitre en verre (2) dont la surface circonférentielle (3) intérieure est inclinée pour pouvoir être collée à ladite surface d'appui, au moins une partie de la surface circonférentielle (3) intérieure de la vitre en verre (2) étant surmoulée d'un matériau (4a, 4b) dont la surface extérieure (5a, 5b) se situe à l'opposé de la surface d'appui, s'étendant pour l'essentiel parallèlement au segment correspondant de ladite surface d'appui, **caractérisé en ce que** chaque partie surmoulée (6a, 6b) compense les extensions dans le parallélisme et/ou dans la distance entre la surface circonférentielle (3) intérieure et la surface d'appui en prenant une forme correspondant pour l'essentiel à l'espace séparant la surface circonférentielle (3) intérieure d'une part et à la surface d'appui pourvue d'une épaisseur de colle constante et suffisante d'autre part, lorsque l'agencement relatif de ladite surface circonférentielle (3) intérieure et de la surface d'appui est optimale et qu'un segment convexe de la surface d'appui surmoulé correspond à chaque segment concave et inversement.

2. Toit en verre selon la revendication 1,
**caractérisé en ce qu'**une pluralité de butées d'étalonnage (8a, 8b) séparées sont prévues le long de chaque partie surmoulée (6a, 6b), lesdites butées étant disposées à distances égales les unes des autres le long de l'extension longitudinale de ladite partie.

3. Toit en verre (1) selon la revendication 2, **caractérisé en ce que** l'épaisseur de colle souhaitée correspond à la hauteur des parties (8a, 8b) saillantes prenant la forme de butées d'étalonnage.

4. Toit en verre (1) selon l'une quelconque des revendications précédentes, **caractérisé en ce qu'**il comporte un dispositif d'obscurcissement pouvant être déployé parallèlement à la surface intérieure de la vitre en verre (2).
